# EUROPEAN PATENT APPLICATION

(11) **EP 3 588 878 A1**
(43) Date of publication of application: **01.01.2020**
(21) Application number: 18770456.4
(22) Date of filing: 06.02.2018
(51) Int. Cl.: H04L 12/801

(54) **METHOD AND NODE FOR FLOW CONTROL**

(30) Priority: 22.03.2017 CN 201710173783
(71) Applicant: Huawei Technologies Co., Ltd., Longgang District Shenzhen, Guangdong 518129 (CN)
(72) Inventor: YANG, Jinli, Shenzhen Guangdong 518129 (CN); YIN, Zhaogen, Shenzhen Guangdong 518129 (CN)
(74) Representative: Epping - Hermann - Fischer
(86) International application number: PCT/CN2018/075447
(87) International publication number: WO 2018/171351

(57) **Abstract**

A method and a node for traffic control are provided, where the method includes: sending, by a source node, N probe packets to a destination node; obtaining, by a control node, a packet delay variation trend obtained based on the N probe packets; and determining, by the control node, a congestion detection result of current traffic transmission based on the packet delay variation trend and a delay prediction value of a service packet sent by the source node to the destination node after a current moment, and sending the congestion detection result to the source node, where the congestion detection result is used by the source node to reduce a service packet sending rate of the source node when it is determined that the congestion detection result indicates congestion, and the packet delay variation trend corresponds to a congestion duration change. According to this solution, congestion in traffic transmission can be predicted in advance, so that the source node can perform traffic control in advance, thereby reducing severe congestion due to traffic control hysteresis.

## Description

This application claims priority to Chinese Patent No. 201710173783.7, filed with the Chinese Patent Office on March 22, 2017 and entitled "METHOD AND NODE FOR TRAFFIC CONTROL", which is incorporated herein by reference in its entirety.

### TECHNICAL FIELD

This application relates to the field of communications technologies, and in particular, to a method and a node for traffic control.

### BACKGROUND

At present, in an end-to-end method for traffic control, to remove congestion in end-to-end traffic transmission, a congestion situation is mainly determined based on a current delay and a packet loss rate, and then congestion is removed by performing traffic control. This traffic control mode greatly affects performance of a delay-sensitive service. For example, a CA service has a high delay requirement, and if there is a relatively large delay in a time period more than consecutive dozens of milliseconds, a congestion control delay tends to exceed a tolerance value of the delay-sensitive service, resulting in a negative gain in the CA service.

Because timeliness needs to be considered during traffic control, the traffic control mode can be used to determine a congestion state based only on a current delay. Therefore, in the current traffic control mode, the congestion state cannot be predicted in advance, traffic control cannot be performed in advance, and it cannot be ensured that traffic control is performed in time. In the current traffic control mode, congestion cannot be removed in time, and traffic control hysteresis easily occurs, resulting in a relatively large congestion delay or relatively severe packet losses.

### SUMMARY

This application provides a method and a node for traffic control, to resolve a prior-art problem that end-to-end traffic control hysteresis causes severe congestion.

According to a first aspect of this application, a method for traffic control is provided. The method may be applied to a communication device or a communications system. When the method is applied to a communication device, each node in this application may be a functional module in the communication device, and then this application is used to control traffic among different functional modules inside a same communication device. When the method is applied to a communication system, each node in this application may be an independent communication device, and then this application is used to control traffic among different communication devices in a same communications system. Based on the foregoing two application scenarios, the method may include:
first, obtaining, by a control node, a delay prediction value of a service packet sent by a source node to a destination node after a current moment, and then determining, by the control node, a congestion detection result of current traffic transmission based on a packet delay variation trend and the delay prediction value, and sending the congestion detection result to the source node, where the congestion detection result is used by the source node to reduce a service packet sending rate of the source node when it is determined that the congestion detection result indicates congestion, and the packet delay variation trend corresponds to a congestion duration change.

In an existing mechanism, whether current traffic transmission is in a congested state can be determined based only on current traffic transmission, but a congestion state at a future moment cannot be predicted, and a packet loss tends to occur in a delay-sensitive service. Compared with the existing mechanism, in this application, a congestion state can be predicted in advance by performing congestion detection based on the packet delay variation trend and the delay prediction value of the service packet, so that the source node can dynamically control the service packet sending rate at source in advance. In this way, traffic can be controlled in time and a packet loss probability can be effectively reduced by performing traffic control in advance.

In some possible designs, the packet delay variation trend is represented by a delay change curve, the delay prediction value of the service packet is obtained based on a delay change curve in a current prediction period, the delay change curve in the current prediction period is obtained based on sending moments of N probe packets and receiving moments of the N probe packets, and the N probe packets are sent by the source node to the destination node in the current prediction period, where N is a positive integer.

In some possible designs, there are a plurality of ways to obtain the delay prediction value, which are specifically as follows:
1. Before the control node obtains the delay prediction value of the service packet sent after the current moment, the control node calculates packet delays based on obtained N probe packets, then obtains a delay change curve based on the packet delays, specifically may be the packet delays of the N probe packets, and obtains, based on the packet delays of the N probe packets and a fitting algorithm, a delay change curve used to represent the packet delay variation trend. Then, at least one delay prediction value is obtained based on a current delay and the delay change curve.
2. The control node obtains, from the destination node, a delay prediction value calculated by the destination node based on the delay change curve and a packet delay.
3. After obtaining, from the destination node, the delay change curve calculated by the destination node, the control node obtains the foregoing delay prediction value based on the current delay and the obtained delay change curve.

Optionally, the delay change curve may be used in a current congestion detection period, or may be used in at least one congestion detection period, or may be used only in a current congestion detection period. In this way, it may be ensured that a delay change curve used in an entire congestion detection period is closest to a real traffic transmission state. Therefore, a delay prediction value predicted by using the delay change curve is correspondingly more accurate, and the congestion detection period may also be dynamically adjusted. This is not specifically limited in this application.

In some possible designs, the current moment is t, and the method further includes:
predicting, by the control node based on the delay change curve, a delay prediction value of a packet sent by the source node at (t + Δt), where Δt is a moment at which a probe packet is sent after t, and Δt is less than or equal to a preset threshold.

In some possible designs, the congestion detection result is further used to instruct the source node to: when it is determined that the current traffic transmission is not congested, increase the service packet sending rate of the source node based on a current service packet sending rate of the source node and the delay prediction value.

In some possible designs, the control node may further perform congestion detection based on switching of a traffic control mode, where the traffic control mode uniquely corresponds to probe packet sending frequency, congestion detection performed by the control node, and frequency for adjusting the service packet sending rate. In a system, three function modules may be separately disposed, and then traffic control modes of several gradients may be set based on the current congestion degree or a traffic transmission state, so that the control node can dynamically switch among different levels of traffic control modes.

When the congestion detection result indicates non-congestion, the control node detects congestion of the current traffic transmission in a first traffic control mode; or
when the congestion detection result indicates congestion, the control node detects congestion of the current traffic transmission in a second traffic control mode. In a variable frequency manner based on analysis of features such as service traffic, a congestion state, a processor usage rate, and the like, congestion control execution frequency can be reduced within a time period in which congestion control does not need to be performed (for example, when there is no congestion or service), thereby reducing impact of congestion detection and traffic control on device forwarding performance and processor performance. In addition, long-term and persistent congestion detection is feasible in this variable frequency manner.

According to a second aspect of this application, a method for traffic control is provided. The method includes:
sending, by a source node, N probe packets to a destination node in a prediction period, where N is a positive integer, the N probe packets are used by the destination node or a control node to predict a packet delay variation trend, and the packet delay variation trend corresponds to a congestion duration change; and
receiving, by the source node, a congestion detection result sent by the control node, and reducing a service packet sending rate of the source node when the congestion detection result indicates congestion, where the congestion detection result is determined by the control node based on the packet delay variation trend and an obtained delay prediction value of a service packet that is sent by the source node to the destination node after a current moment.

Compared with the prior art, in a solution provided in this application, the transceiver module 1101 sends N probe packets to the destination node in the prediction period, where the N probe packets are used by the destination node or the control node to predict the packet delay variation trend. Therefore, after the congestion detection result sent by the control node 100 is received, current traffic transmission may be controlled in advance based on the congestion detection result, so that the service packet sending rate can be dynamically controlled in advance at source. In this way, traffic can be controlled in time and a packet loss probability can be effectively reduced by performing traffic control in advance.

In some possible designs, the packet delay variation trend is represented by a delay change curve, the delay prediction value of the service packet is obtained based on a delay change curve in a current prediction period, and the delay change curve in the current prediction period is obtained based on sending moments of the N probe packets and receiving moments of the N probe packets. The source node may send information about the sending moments of the N probe packets to the control node, so that the control node calculates the packet delay; or forward the information about the sending moments of the N probe packets to the control node via the destination node, so that the control node calculates the packet delay. Alternatively, after the destination node calculates the packet delay, the packet delay is sent to the control node. Alternatively, after calculating the packet delay, the destination node may further calculate the delay change curve, and may even calculate the delay prediction value, and then send the packet delay, the delay change curve, and the delay prediction value to the control node, so that the control node can predict a congestion state of a future moment after the current moment, thereby achieving a purpose of controlling traffic in advance.

In some possible designs, frequency for sending the N probe packets is fixed frequency or variable frequency.

Optionally, the N probe packets are sent at variable frequency based on at least one of service traffic, a congestion degree of traffic transmission, and system load.

The source node may further perform congestion detection and traffic control based on switching of a traffic control mode, where the traffic control mode uniquely corresponds to probe packet sending frequency, congestion detection performed by the control node, and frequency for adjusting the service packet sending rate. In a system, three function modules may be separately disposed, and then traffic control modes of several gradients may be set based on the current congestion degree or a traffic transmission state, so that the source node can dynamically switch among different levels of traffic control modes.

The traffic control mode uniquely corresponds to the probe packet sending frequency and the frequency for adjusting the service packet sending rate.

When the congestion detection result indicates non-congestion, the source node sends a probe packet and adjusts the service packet sending rate in a first traffic control mode; or
when the congestion detection result indicates congestion, the source node sends a probe packet and adjusts the service packet sending rate in a second traffic control mode.

It can be seen that in a variable frequency manner based on analysis of features such as service traffic, a congestion state, a processor usage rate, and the like, congestion control execution frequency can be reduced within a time period in which congestion control does not need to be performed (for example, when there is no congestion or service), thereby reducing impact of congestion detection and traffic control on device forwarding performance and processor performance. In addition, long-term and persistent congestion detection is feasible in this variable frequency manner.

In some possible designs, it is assumed that probe packet sending frequency in the prediction period is f1, and frequency for predicting the delay prediction value of the service packet based on the N probe packets is f2, where f1 is greater than f2, and both f1 and f2 are positive numbers. According to a third aspect of this application, a control node for traffic control is provided. The control node has a function of implementing the method for traffic control corresponding to the first aspect. The function may be implemented by using hardware, or may be implemented by using hardware to perform corresponding software. The hardware or the software includes one or more modules corresponding to the foregoing function, and the module may be software and/or hardware.

In a possible design, the control node includes:
a transceiver module, configured to obtain a delay prediction value of a service packet sent by a source node to a destination node after a current moment; and
a processing module, configured to determine a congestion detection result of current traffic transmission based on a packet delay variation trend and the delay prediction value obtained by the transceiver module, and send the congestion detection result to the source node, where the congestion detection result is used by the source node to reduce a service packet sending rate of the source node when it is determined that the congestion detection result indicates congestion, and the packet delay variation trend corresponds to a congestion duration change.

Optionally, the packet delay variation trend is represented by a delay change curve, the delay prediction value of the service packet is obtained based on a delay change curve in a current prediction period, the delay change curve in the current prediction period is obtained based on sending moments of N probe packets and receiving moments of the N probe packets, and the N probe packets are sent by the source node to the destination node in the current prediction period, where N is a positive integer.

Optionally, before the control node obtains the delay prediction value of the service packet sent after the current moment, the processing module is further configured to:
obtain, by using the transceiver module, packet delays of the N probe packets, and
obtain, based on the packet delays of the N probe packets and a fitting algorithm, the delay change curve used to represent the packet delay variation trend.

Optionally, the current moment is t, and the processing module is further configured to:
predict, based on the delay change curve, a delay prediction value of a packet sent by the source node at (t + Δt), where Δt is a moment at which a probe packet is sent after t, and Δt is less than or equal to a preset threshold.

Optionally, the control node controls traffic based on a traffic control mode, where the traffic control mode uniquely corresponds to probe packet sending frequency and frequency for adjusting the service packet sending rate; and the control node further includes a detection module, and the detection module is configured to:
when the congestion detection result indicates non-congestion, detect congestion of the current traffic transmission in a first traffic control mode; or
when the congestion detection result indicates congestion, detect congestion of the current traffic transmission in a second traffic control mode.

In a possible design, the control node includes:
at least one processor, a memory, and a transceiver, where
the memory is configured to store program code, and the processor is configured to invoke the program code in the memory to perform the following operations:
   obtaining, by using the transceiver, a delay prediction value of a service packet sent by the source node to the destination node after a current moment; and
   determining a congestion detection result of current traffic transmission based on a packet delay variation trend and the delay prediction value obtained by the transceiver module, and sending the congestion detection result to the source node, where the congestion detection result is used by the source node to reduce a service packet sending rate of the source node when it is determined that the congestion detection result indicates congestion, and the packet delay variation trend corresponds to a congestion duration change.

According to a fourth aspect of this application, a source node for traffic control is provided. The source node has a function of implementing the method for traffic control corresponding to the second aspect. The function may be implemented by using hardware, or may be implemented by using hardware to perform corresponding software. The hardware or the software includes one or more modules corresponding to the foregoing function, and the module may be software and/or hardware.

In a possible design, the source node includes:
a transceiver module, configured to send N probe packets to a destination node in a prediction period, where N is a positive integer, the N probe packets are used by the destination node or a control node to predict a packet delay variation trend, and the packet delay variation trend corresponds to a congestion duration change; and
receive a congestion detection result sent by the control node; and a processing module, configured to reduce a service packet sending rate of the source node when the congestion detection result indicates congestion, where the congestion detection result is determined by the control node based on the packet delay variation trend and an obtained delay prediction value of a service packet that is sent by the source node to the destination node after a current moment.

Optionally, the packet delay variation trend is represented by a delay change curve, the delay prediction value of the service packet is obtained based on a delay change curve in a current prediction period, and the delay change curve in the current prediction period is obtained based on sending moments of the N probe packets and receiving moments of the N probe packets. Optionally, frequency for sending the N probe packets is fixed frequency or variable frequency. Optionally, the N probe packets are sent at variable frequency based on at least one of service traffic, a congestion degree of traffic transmission, and system load.

Optionally, the source node controls traffic based on a traffic control mode, and the traffic control mode uniquely corresponds to probe packet sending frequency and frequency for adjusting the service packet sending rate. The transceiver module is specifically configured to:
when the congestion detection result indicates non-congestion, send a probe packet and adjust the service packet sending rate in a first traffic control mode; or
when the congestion detection result indicates congestion, send a probe packet and adjust the service packet sending rate in a second traffic control mode.

Optionally, it is assumed that probe packet sending frequency in the prediction period is f1, and frequency for predicting the delay prediction value of the service packet based on the N probe packets is f2, where f1 is greater than f2, and both f1 and f2 are positive numbers.

In a possible design, the source node includes:
at least one processor, a memory, and a transceiver, where
the memory is configured to store program code, and the processor is configured to invoke the program code in the memory to perform the following operations:
   sending N probe packets to the destination node in a prediction period by using the transceiver, where N is a positive integer, the N probe packets are used by the destination node or the control node to predict a packet delay variation trend, and the packet delay variation trend corresponds to a congestion duration change; and
   receiving a congestion detection result sent by the control node; and
   reducing a service packet sending rate of the source node when the congestion detection result received by the transceiver indicates congestion, where the congestion detection result is determined by the control node based on the packet delay variation trend and an obtained delay prediction value of a service packet that is sent by the source node to the destination node after a current moment.

According to a fifth aspect of this application, a communications system is provided. The communications system has a function of implementing the method for traffic control in the first aspect and the second aspect. The function may be implemented by using hardware, or may be implemented by using hardware to perform corresponding software. The hardware or the software includes one or more modules corresponding to the foregoing function, and the module may be software and/or hardware. The communications system includes:
a destination node, the control node in the third aspect, and the source node in the fourth aspect.

According to another aspect of this application, a computer readable storage medium is provided. The computer readable storage medium stores an instruction, and when the computer readable storage medium runs on a computer, the computer performs the methods according to the foregoing aspects.

Compared with the prior art, in a solution provided in this application, in this application, a congestion state can be predicted in advance by performing congestion detection based on the packet delay variation trend and the delay prediction value of the service packet, so that the source node can dynamically control the service packet sending rate at source in advance. In this way, traffic can be controlled in time and a packet loss probability can be effectively reduced by performing traffic control in advance.

### BRIEF DESCRIPTION OF DRAWINGS

FIG. 1 is a schematic diagram of a network topology of a communications system according to an embodiment of the present invention;
FIG. 2 is a schematic flowchart of traffic control according to an embodiment of the present invention;
FIG. 3 is a schematic diagram of a delay change curve according to an embodiment of the present invention;
FIG. 4 is another schematic flowchart of traffic control according to an embodiment of the present invention;
FIG. 5 is another schematic flowchart of traffic control according to an embodiment of the present invention;
FIG. 6 is another schematic flowchart of traffic control according to an embodiment of the present invention;
FIG. 7 is another schematic flowchart of traffic control according to an embodiment of the present invention;
FIG. 8 is another schematic flowchart of traffic control according to an embodiment of the present invention;
FIG. 9 is a schematic diagram of a functional module for variable frequency switching in a traffic control mode according to an embodiment of the present invention;
FIG. 10 is a schematic structural diagram of a control node for traffic control according to an embodiment of the present invention;
FIG. 11 is a schematic diagram of a source node for traffic control according to an embodiment of the present invention; and
FIG. 12 is a schematic structural diagram of a physical device for performing traffic control according to an embodiment of the present invention.

### DESCRIPTION OF EMBODIMENTS

In the specification, claims, and accompanying drawings of this application, the terms "first", "second", and so on are intended to distinguish between similar objects but do not necessarily indicate a specific order or sequence. It should be understood that the terms used in such a way are interchangeable in proper circumstances so that the embodiments of the present invention described herein can be implemented in other orders than the order illustrated or described herein. In addition, the terms "include", "have", or any other variant thereof are intended to cover a non-exclusive inclusion. For example, a process, a method, a system, a product, or a device that includes a series of steps or modules is not necessarily limited to the steps or modules that are expressly listed, but may include another step or module not expressly listed or inherent to the process, the method, the product, or the device. The module division in this specification is merely logical division, and there may be another division during implementation in actual application. For example, a plurality of modules may be combined or integrated into another system, or some features may be ignored or not performed. In addition, the displayed or discussed mutual couplings or direct couplings or communication connections may be implemented through some interfaces. The indirect couplings or communication connections between the modules may be implemented in electronic or another form, and this is not limited in this specification. In addition, modules or sub-modules described as separate components may be or may not be physically separated, or may be or may not be physical modules, or may not be grouped into a plurality of circuit modules. Objectives of the solutions of this application may be achieved by selecting some or all of the modules according to actual requirements.

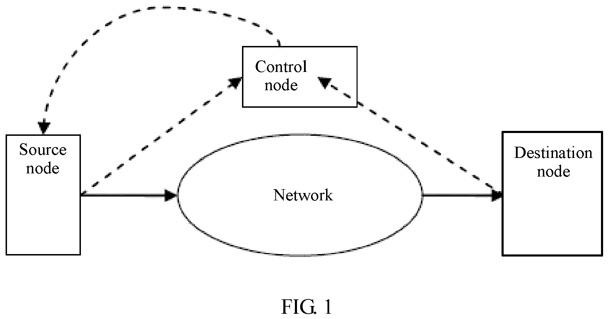

This application provides a method and a node for traffic control. FIG. 1 is a schematic diagram of a network topology, where a source node refers to a transmission node that sends a data packet (including a probe packet and a service packet), and also refers to a transmission node for traffic control. A destination node refers to a transmission node that receives a data packet from the source node. A control node refers to a congestion detection node based on delay prediction. The control node may detect whether a transmission link from the source node to the destination node is in a congested state, and a deployment location of the control node is not limited. Specifically, the control node may be deployed as one of the following cases: independently deployed, deployed on the source node, deployed on the destination node, deployed on a transmission network between the source node and the destination node, and deployed on a control node that can maintain the network topology.

In FIG. 1, the source node sends probe packets to the destination node via a network. The probe packets may be used by the control node or the destination node to predict delay prediction values of service packets at some moments after a current moment. Then the control node performs congestion detection on a congestion state of a current transmission link based on the obtained delay prediction values, and sends a congestion detection result to the source node, so that the source node can dynamically control a service packet sending rate based on the congestion detection result, so as to dynamically control traffic transmission.

To resolve a problem of traffic transmission congestion caused by delayed traffic control, this application mainly provides the following technical solutions:
Delay prediction is performed based on delay sample information obtained by using a delay detection frame, a delay value in a future short time is estimated, a congestion state is detected based on the predicted delay prediction value, and congestion control is performed in advance, so that congestion is effectively avoided, and the following problem is resolved: in a transmission congestion scenario, congestion detection and traffic control hysteresis affect delay-sensitive service performance.

In addition, a probe packet may be further sent at variable frequency based on analysis of features such as service traffic, a congestion state, and a processor usage rate, so as to reduce congestion control execution frequency in a time period in which congestion control does not need to be performed (for example, when there is no congestion or service), thereby reducing impact of congestion control on device forwarding performance and processor performance. Referring to FIG. 1, the following uses an example to describe the method for traffic control provided in this application. The method may be applied to a communication device or a communications system. When the method is applied to a communication device, each node in this application may be a functional module in the communication device, and then this application is used to control traffic among different functional modules inside a same communication device. When the method is applied to a communication system, each node in this application may be an independent communication device, and then this application is used to control traffic among different communication devices in a same communications system. Based on the foregoing two application scenarios, the method may include the following steps: 101. The source node sends N probe packets to the destination node in a prediction period.

N is a positive integer, the N probe packets are used by the destination node or the control node to predict a packet delay variation trend, and the packet delay variation trend corresponds to a congestion duration change.

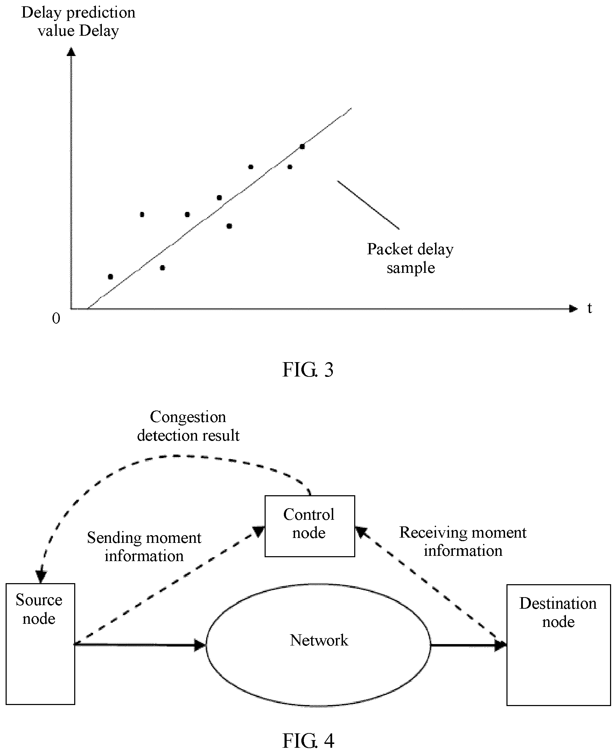

Optionally, in an implementation, the packet delay variation trend may be represented by a delay change curve. For the delay change curve, refer to a line graph shown in FIG. 3. When the delay change curve shown in FIG. 3 is being plotted, first a sending moment of each probe packet sent by the source node and a receiving moment of each probe packet on a destination node end are separately obtained, and then subtraction is performed based on the receiving moment of the probe packet and the sending moment of the probe packet to obtain a packet delay of the probe packet. N packet delays are obtained in total. Then, the N packet delays are used as delay samples, and curve fitting may be performed on the N packet delays by using a fitting algorithm to obtain the delay change curve shown in FIG. 3. The linear change curve shown in FIG. 3 is: y(t) = a0^{∗}1 + a1^{∗}t. y(t) represents a delay prediction value, a0 and a1 are curve coefficients, and t is congestion time. In another implementation, this formula may further be changed. This is not specifically limited in this application.

102. The destination node receives the N probe packets sent by the source node, and calculates N packet delays based on the N probe packets.

103. The control node obtains a delay prediction value of a service packet sent by the source node to the destination node after a current moment.

Then, the delay prediction value of the service packet is obtained based on a delay change curve in a current prediction period, the delay change curve in the current prediction period is obtained based on sending moments of the N probe packets and receiving moments of the N probe packets, and the N probe packets are sent by the source node to the destination node in the current prediction period, where N is a positive integer.

104. The control node determines a congestion detection result of current traffic transmission based on the packet delay variation trend and the delay prediction value.

In some implementations, a congestion threshold may be set, and a value of the congestion threshold is not limited in this application. When the control node performs congestion detection, if the delay prediction value is not less than the congestion threshold, it may be determined that a traffic transmission state between the current source node and the destination node is congested; if the delay prediction value is less than the congestion threshold, the traffic transmission state between the current source node and the destination node is not congested.

105. The control node sends the congestion detection result to the source node.

The congestion detection result is used by the source node to reduce a service packet sending rate of the source node when it is determined that the congestion detection result indicates congestion.

106. The source node receives the congestion detection result sent by the control node, and reduces the service packet sending rate of the source node when the congestion detection result indicates congestion.

In an existing mechanism, whether current traffic transmission is in a congested state can be only determined based on the current traffic transmission, and a congestion state at a future moment cannot be predicted. A packet loss tends to occur in a delay-sensitive service. Compared with the existing mechanism, in this application, a congestion state can be predicted in advance by performing congestion detection based on the packet delay variation trend and the delay prediction value of the service packet, so that the source node can dynamically control the service packet sending rate at source in advance. In this way, traffic can be controlled in time and a packet loss probability can be effectively reduced by performing traffic control in advance. Optionally, the congestion detection result is further used to instruct the source node to: when it is determined that the current traffic transmission is not congested, increase the service packet sending rate of the source node based on a current service packet sending rate of the source node and the delay prediction value.

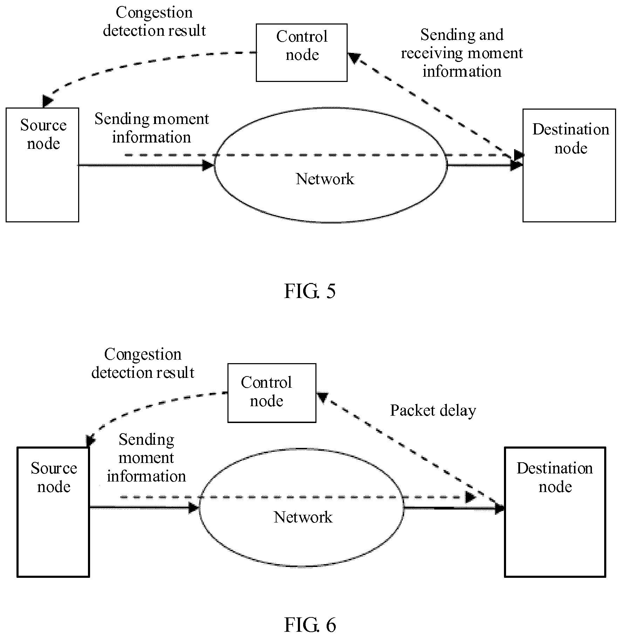

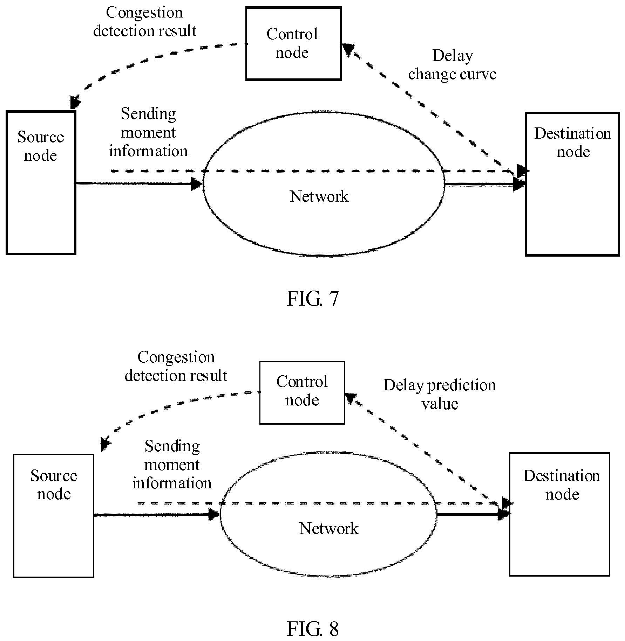

Optionally, in some embodiments of the present invention, the control node obtains the delay prediction value mainly in the following manners:
1. The control node calculates N packet delays of N probe packets, and obtains a delay change curve based on the N packet delays.
   (a) The control node obtains information about sending moments of the N probe packets from the source node, and obtains information about receiving moments of the N probe packets from the destination node. For details, refer to FIG. 4.
   (b) The control node obtains the information about the sending moments of the N probe packets and the information about the receiving moments of the N probe packets from the destination node. For details, refer to FIG. 5.
      After obtaining the sending moments and the receiving moments of the N probe packets through step (a) or (b), the control node calculates the N packet delays, and performs curve fitting on the N packet delays by using a fitting algorithm, to obtain a delay change curve used to indicate the packet delay variation trend, and then the control node may predict, based on the delay change curve, a delay prediction value of a packet sent by the source node at (t + Δt), where Δt is a moment at which the probe packet is sent after t, and Δt is less than or equal to a preset threshold. For example, based on the delay change curve shown in FIG. 3, the delay prediction value of the packet sent at (t + Δt) may be calculated by using the formula y(t) = a0^{∗}1 + a1^{∗}t. In this application, a value of Δt may be at a millisecond level. It should be ensured that the delay prediction value calculated based on the selected Δt is close to and does not deviate from the original delay change curve. In addition, the delay prediction value may be further limited to ensure that a delay prediction value finally selected for congestion prediction does not exceed the delay prediction value obtained based on the delay change curve, such as the delay prediction value delay 1_{pred} = Max(delay2_{pred}, 0) selected for congestion prediction, where delay2_{pred} is the delay prediction value obtained based on the delay change curve.
      Optionally, the delay change curve may be used in a current congestion detection period, or may be used in at least one congestion detection period, or may be used only in a current congestion detection period. In this way, it may be ensured that a delay change curve used in an entire congestion detection period is closest to a real traffic transmission state. Therefore, a delay prediction value predicted by using the delay change curve is correspondingly more accurate, and the congestion detection period may also be dynamically adjusted. This is not specifically limited in this application.
2. The destination node calculates N packet delays of N probe packets, and then the control node obtains a delay change curve based on the N packet delays. For details, refer to FIG. 6.
   First, the destination node obtains information about sending moments of the N probe packets from the source node, then calculates the N packet delays based on information about receiving moments of the N probe packets received by the destination node and the information about the sending moments of the N probe packets, and then sends the calculated N packet delays to the control node.
   Then, the control node performs curve fitting on the N packet delays to obtain a delay change curve. Subsequently, the control node may calculate, based on the obtained delay change curve, a delay prediction value of a packet sent at (t + Δt), and perform congestion prediction based on the delay prediction value of the packet sent at (t + Δt).
3. The destination node calculates N packet delays of N probe packets and obtains a delay change curve, and then the control node calculates a delay prediction value. For details, refer to FIG. 7.
   First, the destination node obtains information about sending moments of the N probe packets from the source node, then calculates the N packet delays based on information about receiving moments of the N probe packets received by the destination node and the information about the sending moments of the N probe packets, and then performs curve fitting on the N packet delays to obtain a delay change curve. Then, the destination node sends the obtained delay change curve to the control node, so that the control node can calculate, based on the obtained delay change curve, a delay prediction value of a packet sent at (t + Δt), and performs congestion prediction based on the delay prediction value of the packet sent at (t + Δt).
4. The destination node calculates N packet delays of N probe packets, obtains a delay change curve, calculates a delay prediction value based on the delay change curve, and then sends the obtained delay prediction value to the control node. For details, refer to FIG. 8.

Optionally, in some embodiments of the present invention, frequency for sending the N probe packets may be fixed frequency or variable frequency. Correspondingly, frequency at which the control node performs congestion detection is also fixed frequency or variable frequency.

In some implementations, in consideration that frequent probe packet sending and frequent congestion detection may increase system load in a short time, and reduce system performance, for example, lower a hardware forwarding function and then reduce processor performance. The probe packet sending frequency and the congestion detection frequency may be adaptively and dynamically adjusted. Specifically, the probe packet may be sent at variable frequency based on at least one of any factors that affect the system performance (including service traffic, a congestion degree of traffic transmission, and system load), and a gradient of variable frequency may be set based on the system performance or the service traffic.

For example, it may be set that traffic is controlled based on a traffic control mode, and different traffic control modes are dynamically switched. The traffic control mode uniquely corresponds to probe packet sending frequency, congestion detection performed by the control node, and frequency for adjusting the service packet sending rate. Three functional modules may be separately set in a system, and several traffic control modes of specific gradients are set based on a current congestion degree or a traffic transmission state, so that the source node, the destination node and the control node can dynamically switch among all levels of traffic control modes.

When the congestion detection result indicates non-congestion, the source node sends a probe packet and adjusts the service packet sending rate in a first traffic control mode; or
when the congestion detection result indicates congestion, the source node sends a probe packet and adjusts the service packet sending rate in a second traffic control mode.

Optionally, a switching condition of the traffic control mode may be periodically switched, or may be switched based on a current congestion detection result, or may be switched based on the following conditions: whether congestion duration is higher than a first threshold, whether non-congestion duration is higher than a second threshold, whether the service packet sending frequency is higher than a third threshold, whether a processor usage rate is higher than a fourth threshold, whether a delay triggering switching threshold is higher than a fifth threshold, or the like. This is not specifically limited in this application.

For example, for a scenario in which the second traffic control mode is switched to the first traffic control mode:
for example, when the non-congestion duration is higher than the second threshold, or
the service packet sending rate is less than the third threshold, or the processor usage rate is higher than the fourth threshold, the second traffic control mode may be switched to the first traffic control mode.

For a scenario in which the first traffic control mode is switched to the second traffic control mode:
for example, when a congestion detection result in a congestion detection period indicates congestion, or an average delay of probe packets is greater than the fifth threshold, and the service packet sending rate is higher than the third threshold, the first traffic control mode may be switched to the second traffic control mode.

It can be learned that in this application, in a variable frequency manner based on analysis of features such as service traffic, a congestion state, a processor usage rate, and the like, congestion control execution frequency can be reduced within a time period in which congestion control does not need to be performed (for example, when there is no congestion or service), thereby reducing impact of congestion detection and traffic control on device forwarding performance and processor performance. In addition, long-term and persistent congestion detection is feasible in this variable frequency manner.

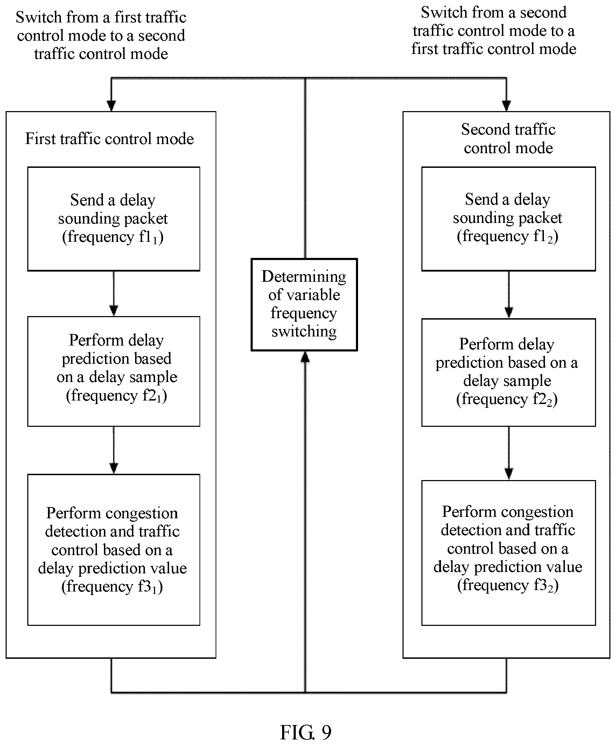

As shown in FIG. 9, in a first traffic control mode, there are probe packet sending frequency f1₁, frequency f2₁ for performing delay prediction, and frequency f3₁ for performing congestion detection based on a delay prediction value. In a second traffic control mode, there are probe packet sending frequency f1₂, frequency f2₂ for performing delay prediction, and frequency f3₂ for performing congestion detection based on a delay prediction value, where f1₁ > f1₂, f2₁ > f2₂, and f3₁ > f3₂.

Optionally, in some embodiments of the present invention, it is assumed that probe packet sending frequency in the prediction period is f1, and frequency for predicting the delay prediction value of the service packet based on the N probe packets is f2, where f1 is greater than f2, and both f1 and f2 are positive numbers.

Optionally, in some embodiments of the present invention, this application may be further applied to carrier aggregation (CA for short), dual connectivity (English full name: Dual Connectivity, DC for short), or the like, so that when the service packet is offloaded from a primary station to a secondary station, congestion detection may also be performed based on a delay prediction value. For example, when it is detected that a transmission path from the primary station to the secondary station is congested, the primary station reduces or stops offloading service traffic to the secondary station; or when it is detected that a transmission path from the primary station to the secondary station is not congested, the primary station increases service traffic offloaded to the secondary station

Based on the foregoing embodiments, in this application, a congestion state can be predicted in advance based on a predicted delay prediction value, and traffic control can be performed in advance, thereby effectively avoiding congestion, and in particular, improving forwarding performance of a delay-sensitive service (such as CA).

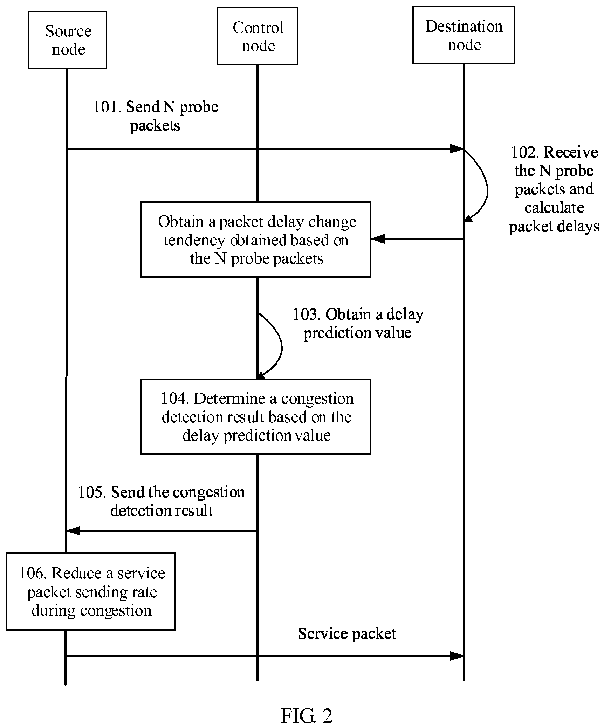

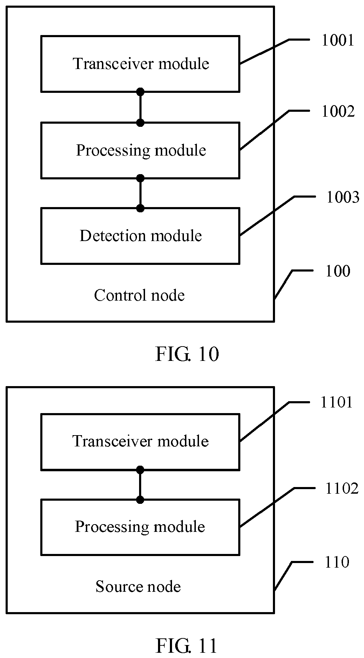

The technical features mentioned in any one of the embodiments described in FIG. 1 to FIG. 9 are also applicable to embodiments corresponding to FIG. 10 and FIG. 11 in this application.

Similar content is not described below.

The foregoing describes the method for traffic control in this application, and the following separately describes a control node and a source node that perform the method for traffic control.
1. Referring to FIG. 10, a control node 100 used for traffic control is described. The control node 100 includes:
   a transceiver module 1001, configured to obtain a delay prediction value of a service packet sent by a source node to a destination node after a current moment; and
   a processing module 1002, configured to determine a congestion detection result of current traffic transmission based on a packet delay variation trend and the delay prediction value obtained by the transceiver module 1001, and send the congestion detection result to the source node, where the congestion detection result is used by the source node to reduce a service packet sending rate of the source node when it is determined that the congestion detection result indicates congestion, and the packet delay variation trend corresponds to a congestion duration change.

   Compared with the prior art, in a solution provided in this application, the processing module 1002 can predict a congestion state in advance by performing congestion detection based on the delay prediction value of the service packet and the packet delay variation trend, so that the source node can dynamically control the service packet sending rate in advance at source. In this way, traffic can be controlled in time and a packet loss probability can be effectively reduced by performing traffic control in advance.
   Optionally, the packet delay variation trend is represented by a delay change curve, the delay prediction value of the service packet is obtained based on a delay change curve in a current prediction period, the delay change curve in the current prediction period is obtained based on sending moments of N probe packets and receiving moments of the N probe packets, and the N probe packets are sent by the source node to the destination node in the current prediction period, where N is a positive integer.
   Optionally, before the control node obtains the delay prediction value of the service packet sent after the current moment, the processing module 1002 is further configured to:
   obtain, by using the transceiver module 1001, packet delays of the N probe packets, and obtain, based on the packet delays of the N probe packets and a fitting algorithm, the delay change curve used to represent the packet delay variation trend.
   Optionally, the current moment is t, and the processing module 1002 is further configured to:
   predict, based on the delay change curve, a delay prediction value of a packet sent by the source node at (t + Δt), where Δt is a moment at which a probe packet is sent after t, and Δt is less than or equal to a preset threshold.
   Optionally, the control node 100 controls traffic based on a traffic control mode, where the traffic control mode uniquely corresponds to probe packet sending frequency and frequency for adjusting the service packet sending rate; and the control node 100 further includes a detection module 1003, and the detection module 1003 is configured to:
   when the congestion detection result indicates non-congestion, detect congestion of the current traffic transmission in a first traffic control mode; or
   when the congestion detection result indicates congestion, detect congestion of the current traffic transmission in a second traffic control mode.
2. Referring to FIG. 11, a source node 110 used for traffic control is described. The source node 110 includes:
   a transceiver module 1101, configured to send N probe packets to a destination node in a prediction period, where N is a positive integer, the N probe packets are used by the destination node or a control node to predict a packet delay variation trend, and
   the packet delay variation trend corresponds to a congestion duration change; and
   receive a congestion detection result sent by the control node; and a processing module 1102, configured to reduce a service packet sending rate of the source node when the congestion detection result indicates congestion, where the congestion detection result is determined by the control node based on the packet delay variation trend and an obtained delay prediction value of a service packet that is sent by the source node to the destination node after a current moment.

Compared with the prior art, in a solution provided in this application, the transceiver module 1101 sends N probe packets to the destination node in the prediction period, where the N probe packets are used by the destination node or the control node to predict the packet delay variation trend. Therefore, after the congestion detection result sent by the control node 100 is received, current traffic transmission may be controlled in advance based on the congestion detection result, so that the service packet sending rate can be dynamically controlled in advance at source. In this way, traffic can be controlled in time and a packet loss probability can be effectively reduced by performing traffic control in advance.

Optionally, the packet delay variation trend is represented by a delay change curve, the delay prediction value of the service packet is obtained based on a delay change curve in a current prediction period, and the delay change curve in the current prediction period is obtained based on sending moments of the N probe packets and receiving moments of the N probe packets. Optionally, frequency for sending the N probe packets is fixed frequency or variable frequency. Optionally, the N probe packets are sent at variable frequency based on at least one of service traffic, a congestion degree of traffic transmission, and system load.

Optionally, the source node controls traffic based on a traffic control mode, and the traffic control mode uniquely corresponds to probe packet sending frequency and frequency for adjusting the service packet sending rate. The transceiver module is specifically configured to:
when the congestion detection result indicates non-congestion, send a probe packet and adjust the service packet sending rate in a first traffic control mode; or
when the congestion detection result indicates congestion, send a probe packet and adjust the service packet sending rate in a second traffic control mode.

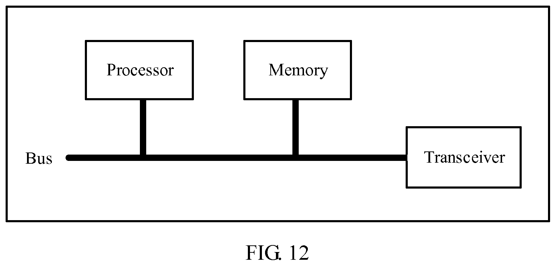

It should be noted that physical devices corresponding to all transceiver modules in the embodiments of this application (including the embodiments shown in FIG. 10 and FIG. 11) may be transceivers, and physical devices corresponding to all processing modules may be processors. The apparatuses shown in FIG. 10 and FIG. 11 may each have a structure shown in FIG. 12. When one of the apparatuses has the structure shown in FIG. 12, a processor and a transceiver in FIG. 12 implement same or similar functions of the processing module, the sending module, and the receiving module that are provided in the apparatus embodiment corresponding to the apparatus. A memory in FIG. 12 stores program code that needs to be invoked when the processor performs the foregoing method for traffic control.

In the foregoing embodiments, the description of each embodiment has respective focuses. For a part that is not described in detail in an embodiment, refer to related descriptions in other embodiments.

It may be clearly understood by a person skilled in the art that, for the purpose of convenient and brief description, for a detailed working process of the foregoing system, apparatus, and module, refer to a corresponding process in the foregoing method embodiments, and details are not described herein again.

In the several embodiments provided in this application, it should be understood that the disclosed system, apparatus, and method may be implemented in other manners. For example, the described apparatus embodiment is merely an example. For example, the module division is merely logical function division and may be other division in actual implementation. For example, a plurality of modules or components may be combined or integrated into another system, or some features may be ignored or not performed. In addition, the displayed or discussed mutual couplings or direct couplings or communication connections may be implemented through some interfaces. The indirect couplings or communication connections between the apparatuses or modules may be implemented in electronic, mechanical, or other forms.

The modules described as separate parts may or may not be physically separate, and parts displayed as modules may or may not be physical modules, may be located in one position, or may be distributed on a plurality of network modules. Some or all the modules may be selected according to actual needs to achieve the objectives of the solutions of the embodiments.

In addition, functional modules in this application may be integrated into one processing module, or each of the modules may exist alone physically, or two or more modules are integrated into one module. The integrated module may be implemented in a form of hardware, or may be implemented in a form of a software functional module. When the integrated module is implemented in the form of a software functional module and sold or used as an independent product, the integrated module may be stored in a computer-readable storage medium.

All or some of the foregoing embodiments may be implemented by using software, hardware, firmware, or any combination thereof. When software is used to implement the embodiments, the embodiments may be implemented completely or partially in a form of a computer program product.

The computer program product includes one or more computer instructions. When the computer program instructions are loaded and executed on the computer, the procedure or functions according to the embodiments of the present invention are all or partially generated. The computer may be a general-purpose computer, a dedicated computer, a computer network, or another programmable apparatus. The computer instructions may be stored in a computer-readable storage medium or may be transmitted from a computer-readable storage medium to another computer-readable storage medium. For example, the computer instructions may be transmitted from a website, computer, server, or data center to another website, computer, server, or data center in a wired (for example, a coaxial cable, an optical fiber, or a digital subscriber line (DSL)) or wireless (for example, infrared, radio, or microwave) manner. The computer-readable storage medium may be any usable medium accessible by a computer, or a data storage device, such as a server or a data center, integrating one or more usable media. The usable medium may be a magnetic medium (for example, a floppy disk, a hard disk, or a magnetic tape), an optical medium (for example, a DVD), a semiconductor medium (for example, a solid state disk (SSD)), or the like.

The technical solutions provided in this application are described in detail above. The principle and implementation of this application are described herein through specific examples. The description about the embodiments is merely provided to help understand the method and core ideas of this application. In addition, a person of ordinary skill in the art can make variations and modifications to this application in terms of the specific implementations and application scopes according to the ideas of this application. Therefore, the content of specification shall not be construed as a limit to this application.

## Claims

1. A method for traffic control, wherein the method comprises:
obtaining, by a control node, a delay prediction value of a service packet sent by a source node to a destination node after a current moment; and
determining, by the control node, a congestion detection result of current traffic transmission based on a packet delay variation trend and the delay prediction value, and sending the congestion detection result to the source node, wherein the congestion detection result is used by the source node to reduce a service packet sending rate of the source node when it is determined that the congestion detection result indicates congestion, and the packet delay variation trend corresponds to a congestion duration change.

2. The method according to claim 1, wherein the packet delay variation trend is represented by a delay change curve, the delay prediction value of the service packet is obtained based on a delay change curve in a current prediction period, the delay change curve in the current prediction period is obtained based on sending moments of N probe packets and receiving moments of the N probe packets, and the N probe packets are sent by the source node to the destination node in the current prediction period, wherein N is a positive integer.

3. The method according to claim 2, wherein before the obtaining, by a control node, a delay prediction value of a service packet sent after a current moment, the method further comprises:
obtaining, by the control node, packet delays of the N probe packets, and obtaining, based on the packet delays of the N probe packets and a fitting algorithm, the delay change curve used to represent the packet delay variation trend.

4. The method according to claim 2 or 3, wherein the current moment is t, and the method further comprises:
predicting, by the control node based on the delay change curve, a delay prediction value of a packet sent by the source node at (t + Δt), wherein Δt is a moment at which a probe packet is sent after t, and Δt is less than or equal to a preset threshold.

5. The method according to any one of claims 2 to 4, wherein the congestion detection result is further used to: when it is determined that the current traffic transmission is not congested, instruct the source node to increase the service packet sending rate of the source node based on a current service packet sending rate of the source node and the delay prediction value.

6. The method according to any one of claims 2 to 5, wherein traffic is controlled based on a traffic control mode in the method, and the traffic control mode uniquely corresponds to probe packet sending frequency and frequency for adjusting the service packet sending rate; and
when the congestion detection result indicates non-congestion, the control node detects congestion of the current traffic transmission in a first traffic control mode; or
when the congestion detection result indicates congestion, the control node detects congestion of the current traffic transmission in a second traffic control mode.

7. A method for traffic control, wherein the method comprises:
sending, by a source node, N probe packets to a destination node in a prediction period, wherein N is a positive integer, the N probe packets are used by the destination node or a control node to predict a packet delay variation trend, and the packet delay variation trend corresponds to a congestion duration change; and
receiving, by the source node, a congestion detection result sent by the control node, and reducing a service packet sending rate of the source node when the congestion detection result indicates congestion, wherein the congestion detection result is determined by the control node based on the packet delay variation trend and an obtained delay prediction value of a service packet that is sent by the source node to the destination node after a current moment.

8. The method according to claim 7, wherein the packet delay variation trend is represented by a delay change curve, the delay prediction value of the service packet is obtained based on a delay change curve in a current prediction period, and the delay change curve in the current prediction period is obtained based on sending moments of the N probe packets and receiving moments of the N probe packets.

9. The method according to claim 8, wherein frequency for sending the N probe packets is fixed frequency or variable frequency.

10. The method according to claim 9, wherein the N probe packets are sent at variable frequency based on at least one of service traffic, a congestion degree of traffic transmission, and system load.

11. The method according to claim 9 or 10, wherein traffic is controlled based on a traffic control mode in the method, and the traffic control mode uniquely corresponds to the probe packet sending frequency and the frequency for adjusting the service packet sending rate; and
when the congestion detection result indicates non-congestion, the source node sends a probe packet and adjusts the service packet sending rate in a first traffic control mode; or
when the congestion detection result indicates congestion, the source node sends a probe packet and adjusts the service packet sending rate in a second traffic control mode.

12. The method according to any one of claims 7 to 11, wherein it is assumed that probe packet sending frequency in the prediction period is f1, and frequency for predicting the delay prediction value of the service packet based on the N probe packets is f2, wherein f1 is greater than f2, and both f1 and f2 are positive numbers.

13. A control node for traffic control, wherein the control node comprises:
a transceiver module, configured to obtain a delay prediction value of a service packet sent by a source node to a destination node after a current moment; and
a processing module, configured to determine a congestion detection result of current traffic transmission based on a packet delay variation trend and the delay prediction value obtained by the transceiver module, and send the congestion detection result to the source node, wherein the congestion detection result is used by the source node to reduce a service packet sending rate of the source node when it is determined that the congestion detection result indicates congestion, and the packet delay variation trend corresponds to a congestion duration change.

14. The control node according to claim 13, wherein the packet delay variation trend is represented by a delay change curve, the delay prediction value of the service packet is obtained based on a delay change curve in a current prediction period, the delay change curve in the current prediction period is obtained based on sending moments of N probe packets and receiving moments of the N probe packets, and the N probe packets are sent by the source node to the destination node in the current prediction period, wherein N is a positive integer.

15. The control node according to claim 14, wherein before the control node obtains the delay prediction value of the service packet sent after the current moment, the processing module is further configured to:
obtain, by using the transceiver module, packet delays of the N probe packets, and obtain, based on the packet delays of the N probe packets and a fitting algorithm, the delay change curve used to represent the packet delay variation trend.

16. The control node according to claim 14 or 15, wherein the current moment is t, and the processing module is further configured to:
predict, based on the delay change curve, a delay prediction value of a packet sent by the source node at (t + Δt), wherein Δt is a moment at which a probe packet is sent after t, and Δt is less than or equal to a preset threshold.

17. The control node according to any one of claims 14 to 16, wherein the control node controls traffic based on a traffic control mode, and the traffic control mode uniquely corresponds to probe packet sending frequency and frequency for adjusting the service packet sending rate; and the control node further comprises a detection module, and the detection module is configured to:
when the congestion detection result indicates non-congestion, detect congestion of the current traffic transmission in a first traffic control mode; or
when the congestion detection result indicates congestion, detect congestion of the current traffic transmission in a second traffic control mode.

18. A source node for traffic control, wherein the source node comprises:
a transceiver module, configured to send N probe packets to a destination node in a prediction period, wherein N is a positive integer, the N probe packets are used by the destination node or a control node to predict a packet delay variation trend, and the packet delay variation trend corresponds to a congestion duration change; and
receive a congestion detection result sent by the control node; and
a processing module, configured to reduce a service packet sending rate of the source node when the congestion detection result indicates congestion, wherein the congestion detection result is determined by the control node based on the packet delay variation trend and an obtained delay prediction value of a service packet that is sent by the source node to the destination node after a current moment.

19. The source node according to claim 18, wherein the packet delay variation trend is represented by a delay change curve, the delay prediction value of the service packet is obtained based on a delay change curve in a current prediction period, and the delay change curve in the current prediction period is obtained based on sending moments of the N probe packets and receiving moments of the N probe packets.

20. The source node according to claim 19, wherein frequency for sending the N probe packets is fixed frequency or variable frequency.

21. The source node according to claim 20, wherein the N probe packets are sent at variable frequency based on at least one of service traffic, a congestion degree of traffic transmission, and system load.

22. The source node according to claim 20 or 21, wherein the source node controls traffic based on a traffic control mode, and the traffic control mode uniquely corresponds to probe packet sending frequency and frequency for adjusting the service packet sending rate; and the transceiver module is specifically configured to:
when the congestion detection result indicates non-congestion, send a probe packet and adjust the service packet sending rate in a first traffic control mode; or
when the congestion detection result indicates congestion, send a probe packet and adjust the service packet sending rate in a second traffic control mode.

23. The source node according to any one of claims 18 to 22, wherein it is assumed that probe packet sending frequency in the prediction period is f1, and frequency for predicting the delay prediction value of the service packet based on the N probe packets is f2, wherein f1 is greater than f2, and both f1 and f2 are positive numbers.
